# EUROPEAN PATENT SPECIFICATION

(11) **EP 2 772 782 B1**
(45) Date of publication and mention of the grant of the patent: **12.04.2017**
(21) Application number: 12844116.9
(22) Date of filing: 23.10.2012
(51) Int. Cl.: G02B 7/28, G02B 7/34, G02B 13/00, G03B 13/36, H04N 5/225, H04N 5/232, G02B 27/00, G02B 7/38, G02B 3/10, H04N 5/369

(54) **IMAGING METHOD AND IMAGE PROCESSING METHOD, PROGRAM USING SAME, RECORDING MEDIUM, AND IMAGING DEVICE**
BILDGEBUNGSVERFAHREN UND BILDVERARBEITUNGSVERFAHREN, PROGRAMM DAFÜR, AUFZEICHNUNGSMEDIUM UND ABBILDUNGSVORRICHTUNG
PROCÉDÉ D'IMAGERIE ET PROCÉDÉ DE TRAITEMENT D'IMAGE, PROGRAMME UTILISANT CEUX-CI, SUPPORT D'ENREGISTREMENT ET DISPOSITIF D'IMAGERIE

(30) Priority: 28.10.2011 JP 2011237634; 28.10.2011 JP 2011237635
(43) Date of publication of application: 03.09.2014
(73) Proprietor: FUJIFILM Corporation, Tokyo 106-8620 (JP)
(72) Inventor: ONO, Shuji, Tokyo 107-0052 (JP)
(74) Representative: Klunker . Schmitt-Nilson . Hirsch
(86) International application number: PCT/JP2012/077304
(87) International publication number: WO 2013/061947

(56) References cited:
- JP-A- H05 199 443
- JP-A- 2001 116 980
- JP-A- 2011 013 514
- JP-A- 2011 118 235
- JP-B- 7 119 893
- US-A- 5 845 155
- US-A1- 2009 284 641

## Description

### Technical Field

The present invention relates to a technology for controlling a focusing state by an imaging device including a multifocal lens.

### Background Art

In recent years, an imaging device using a multifocal lens having a plurality of focal points has been known. For example, Patent Literature 1 describes that a subject image is obtained by convolution processing in an imaging device including a multifocal lens. Also, Patent Literature 2 describes that an imaging signal is corrected with an inverse function based on a point spread function in an imaging device including a multifocal lens. Furthermore, in Patent Literatures 1 and 2, images with different focal lengths are obtained by using the imaging device including the multifocal lens, and an in-focus image is obtained by restoration processing.

Still further, Patent Literature 3 describes that a barcode is read in a short focus region provided to a center portion of a multifocal lens and normal picture taking is performed in a long focus region provided to a peripheral portion of the lens.

On the other hand, as described in Patent Literature 4, pictures of the same subject are taken by a plurality of camera modules with different focal lengths instead of using a multifocal lens, and a multifocal image as a whole is obtained.

### Citation List

### Patent Literature

PTL 1: Japanese Patent Application Laid-Open No. 2008-58540
PTL 2: Japanese Patent Application Laid-Open No. 2008-516299
PTL 3: Japanese Patent Application Laid-Open No. 2003-098426
PTL 4: Japanese Patent Application Laid-Open No. 2008-172523

US 5,845,155 A discloses a multipoint autofocusing system included in a camera body. A multifocal detection sensor is used for detecting the focus state of images of plural focus detection zones. The camera is a AF single lens reflex camera.

US 2009/284641 A1 discloses a focus control apparatus in which scanning is performed from far to near in a scene photographic mode and from near to far in a case where a picture is taken in a portrait photographic mode. The autofocusing time is shortened by raising the autofocus speed and the autofocus speed is raised by selecting a distance measurement zone, scanning that zone to obtain an AF evaluation value.

### Summary of Invention

### Technical Problem

In the conventional technologies as described in Patent Literatures 1 and 2, by performing convolution processing on the image obtained by using the multifocal lens or correcting the image with the inverse function, an in-focus image can be obtained to some extent even with the lens fixed. However, in these conventional technologies, completely focusing on the subject is not intended, and a blur to some extent (within a range in an allowable circle of confusion) occurs in an almost entire range of the depth of field. Therefore, it is difficult to obtain an image that is in focus to the maximum performance of the lens. Moreover, the characteristics of the multifocal lens where the focal length and depth of field vary depending on the region are not sufficiently used.

Also, in the conventional technologies as described in Patent Literatures 1 to 3, by setting a deep depth of focus of the lens or performing restoration processing on the obtained image, an in-focus image can be obtained to some extent in a wide range even with the lens fixed. However, in these conventional technologies, completely focusing on the subject is not intended, and a blur to some extent (within a range in an allowable circle of confusion) occurs in an almost entire range of the depth of field. Therefore, it is difficult to obtain an image that is in focus to the maximum performance of the lens. Moreover, accurate focusing by following a moving subject is also difficult.

Furthermore, when many modules are used as in the technology described in Patent Literature 4, the system disadvantageously becomes complex and upsized.

The present invention was made based on the circumstances described above, and has an object of providing an imaging method and image processing method, programs therefor, recording medium, and an imaging device capable of obtaining a desired image by taking advantage of the characteristics of a multifocal lens and also capable of extracting and selecting the obtained image according to the purpose or preference.

### Solution to Problems

To achieve the above-described object, an imaging method according to the present invention is an imaging method using a multifocal lens having a plurality of regions, the plurality of regions having different focal lengths, and the imaging method includes the features of claim 1.

Preferred embodiments are defined by the dependent claims.

Preferably, in the focusing state control step, the focusing state is controlled so that a main subject is focused via any of the plurality of regions in response to a picture-taking instruction.

Since the focusing state is controlled so that the main subject is focused via any of the plurality of regions, an image where the main subject is accurately focused can be obtained. Also, since focusing is performed via any of the plurality of regions, the time required for lens driving can be shortened, and focusing can be made at high speed. Note that the front image device preferably has an image pickup element including a light-receiving element which selectively receives a light beam passing through any of the plurality of regions.

Note in each aspect of the present invention that the "multifocal lens" is not restricted to a single lens but includes a lens configured of a plurality of lenses. "Controlling the multifocal lens" means that the subject is focused by moving at least part of the lens(es) configuring the multifocal lens. Also, in each aspect of the present invention, a "picture-taking instruction" may be inputted by a user pressing a shutter button, or may be generated by an imaging device at each picture-taking time during moving-picture taking. Furthermore, in each aspect of the present invention, whether the subject is a main subject can be determined based on whether the subject is a face of a person, based on a ratio occupying a picture-taking region, etc.

In the imaging method according to the present invention, in the focusing state control step, control is performed so that the main subject is focused via a region with a shortest required focusing time among the plurality of regions. Since control is performed so that the main subject is focused via a region with the shortest required focusing time among the plurality of regions, focusing can be made at higher speed.

Preferably, in the focusing state control step, control is performed so that the main subject is focused via a main region having a largest area among the plurality of regions. When imaging is performed by using a multifocal lens, image quality depends on the area of each focal region. Therefore, an image accurately focused with high image quality can be obtained, and the maximum performance of the lens can be used.

In the imaging method according to the present invention in the focusing state control step, control is performed so that the main subject is focused via a region with a shortest required focusing time among the plurality of regions, and the image of the subject is obtained in the imaging step, and subsequently in the focusing state control step, control is performed so that the main subject is focused via a main region having a largest area among the plurality of regions, and the image of the subject is obtained in the imaging step.
Therefore, an image focused at high speed without a time lag and an image accurately focused with high image quality but with a slight time lag can be obtained. From these images, the user can select a desired image according to the purpose or preference.

Preferably, after the picture-taking instruction and before the focusing state control step is performed, an image is obtained in all of the plurality of regions with the focusing state at the picture-taking instruction being kept. Since imaging is performed with the focusing state at the time of the picture-taking instruction being kept and a multifocal lens is used, an image focused to some extent can be obtained at high speed in any of the plurality of regions.

Preferably, in response to the picture-taking instruction, at least one of the following image obtainment types is continuously performed to obtain a moving image of the subject: image obtainment with control so that the main subject is focused via a region with the shortest required focusing time among the plurality of regions and image obtainment with control so that the main subject is focused via a main region having the largest area among the plurality of regions. Therefore, at least one of the image focused at high speed and the image accurately focused with high image quality can be continuously obtained. Note that which image is to be obtained may be specified by the user, or both images may be
continuously obtained and then selected and edited subsequently. With this, the user can obtain a desired image according to the purpose or preference.

Preferably, the imaging method according to the present invention further includes a step of recording the obtained image and imaging time information indicating a time from the picture-taking instruction to image obtainment in association with each other. Therefore, the user can select and extract a desired image, such as an image with a picture-taking time is equal to a predetermined time or less, with reference to the imaging time information after image obtainment.

Preferably, the method further includes a step of recording the obtained image and focusing degree information indicating a focusing degree of the obtained image in association with each other. Therefore, the user can select and extract a desired image, such as an image with a focusing degree is equal to a predetermined value or more, with reference to the focusing degree information after image obtainment.

Preferably, the imaging method according to the present invention further includes a step of recording the obtained image and imaging region information indicating from which area the obtained image is obtained in association with each other. Therefore, the user can select and extract an image taken in a specific region (for example, in the main region) according to the purpose or preference.

Note in each aspect of the present invention described above, the "multifocal lens" is not restricted to one lens but includes a lens configured of a plurality of lenses, and "control of the multifocal lens" means that at least part of the lens (lenses) configuring the multifocal lens is moved to focus on the subject.

### Advantageous Effects of Invention

As described above, according to the present invention, a desired image can be obtained by taking advantage of the characteristics of the multifocal lens, and the obtained image can be extracted and selected according to the purpose or preference.

### Brief Description of Drawings

Figure 1 is a block diagram depicting the structure of an imaging device 10.
Figure 2 is a schematic diagram depicting a taking lens 12.
Figure 3 is a schematic diagram depicting another example of a multifocal lens.
Figure 4 is a schematic diagram depicting a relation between a subject distance and a focusing degree in the taking lens 12.
Figure 5 is a schematic view depicting the structure of an image pickup element 16.
Figure 6 is a schematic diagram depicting the arrangement of light-receiving elements in the image pickup element 16.
Figure 7 is a flowchart of an imaging method according to a first embodiment of the present invention.
Figure 8 is a conceptual diagram depicting the imaging method according to the first embodiment of the present invention.
Figure 9 is a flowchart of an imaging method according to a second embodiment of the present invention.
Figure 10 is a flowchart of an imaging method according to a third embodiment of the present invention.
Figure 11 is a diagram depicting an example of priority setting among subjects in the imaging method according to the third embodiment of the present invention.
Figure 12 is a flowchart of an imaging method according to a fourth embodiment of the present invention.
Figure 13 is a flowchart of an image processing method according to a fifth embodiment of the present invention.
Figure 14 is a flowchart of an image processing method according to a sixth embodiment of the present invention.
Figure 15 is a schematic diagram depicting a relation between a subject distance and a focusing degree in the taking lens 12.
Figure 16 is a flowchart of an imaging method according to a seventh embodiment of the present invention.
Figure 17 is another flowchart of the imaging method according to the seventh embodiment of the present invention.
Figure 18 is a flowchart of an imaging method according to an eighth embodiment of the present invention.
Figure 19 is another flowchart of the imaging method according to the eighth embodiment of the present invention.
Figure 20 is a flowchart of an imaging method according to a ninth embodiment of the present invention.
Figure 21 is another flowchart of the imaging method according to the ninth embodiment of the present invention.
Figure 22 is a conceptual diagram depicting the imaging method according to the ninth embodiment of the present invention.
Figure 23 is a schematic diagram depicting an example of specifying a main subject in the imaging device 10.
Figure 24 is a conceptual diagram depicting an image extracting process in the present invention.

### Description of Embodiments

Embodiments for carrying out the imaging method and image processing method, program therefor, recording medium, and imaging device according to the present invention are described in detail below according to the attached drawings.

### [Structure of Imaging Device]

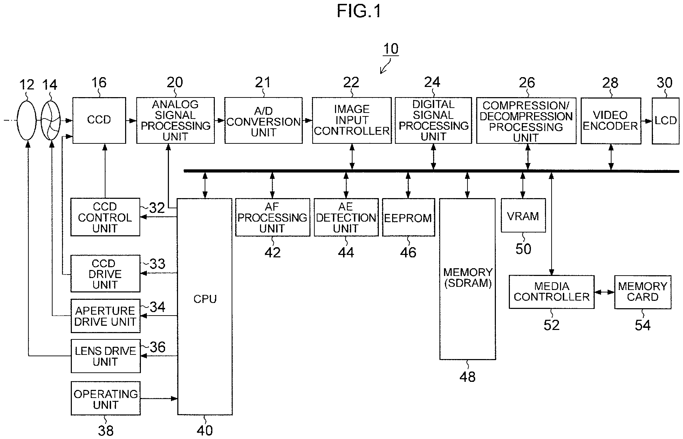

Figure 1 is a block diagram depicting an embodiment of an imaging device 10 (an imaging device or an image processing device) according to a first embodiment of the present invention. The operation of the imaging device 10 as a whole is controlled by a central processing unit (CPU) 40 (focusing state control means and imaging means), and a program (including a program for use in processing according to the present invention such as control of a focusing state, imaging, and image extraction and combining) and parameters required for the operation of the CPU 40 are stored in an EEPROM (electronically Erasable and Programmable Read Only Memory) 46 (recording medium). Note that a program (imaging program and image processing program) according to the present invention can be recorded on the EEPROM 46 of the imaging device 10 as well as a non-transitory semiconductor storage medium or magneto-optical recording medium such as a CD, DVD, BD, HDD, SSD, or any of various memory cards and can be used on an image processing device such as a digital camera or personal computer (PC).

The imaging device 10 is provided with an operating unit 38 such as a shutter button, a mode dial, a replay button, a MENU/OK key, a cross key, and a BACK key. A signal from this operating unit 38 is inputted to the CPU 40 and, based on the input signal, the CPU 40 controls each circuit of the imaging device 10, as will be described further below.

The shutter button is an operation button for inputting an instruction for starting picture taking, and is configured of switches of a two-step stroke type having an S 1 switch that is turned ON at the time of a half push and an S2 switch that is turned ON at the time of a full push. The mode dial is means that selects any of a still-picture/moving-picture taking mode, a manual/auto picture-taking mode, and a picture-taking scene, etc.

The replay button is a button for switching to a replay mode for causing a still picture or moving picture of images taken and recorded to be displayed on a liquid-crystal monitor 30. The MENU/OK key is an operation key having both of a function for making an instruction for causing a menu to be displayed on a screen of the liquid-crystal monitor 30 and a function for making an instruction for confirming and executing selected details and the like. The cross key is an operating unit for inputting an instruction of any of four directions, that is, upward, downward, leftward, and rightward, and functions as cursor movement operation means, a zoom switch, a frame-advance button at the time of replay mode, or the like. The BACK key is used to delete a desired target such as a selected item and cancel instruction details, return to the immediately preceding operation state, or the like. These buttons and keys can also be used for an operation required at the time of image extraction and combining processes or setting priorities among subjects, which will be described further below.

In the taking mode, an image of image light representing a subject is formed via a taking lens 12 and an aperture 14 onto a light-receiving surface of a solid-state image pickup element (hereinafter referred to as a "CCD") 16 (imaging means). The taking lens 12 is driven by a lens drive unit 36 (focusing state control means), which is controlled by the CPU 40, and focusing control or the like is performed, which will be described further below. The lens drive unit 36 changes the focal position by moving the taking lens 12 in an optical axis direction by following an instruction from the CPU 40.

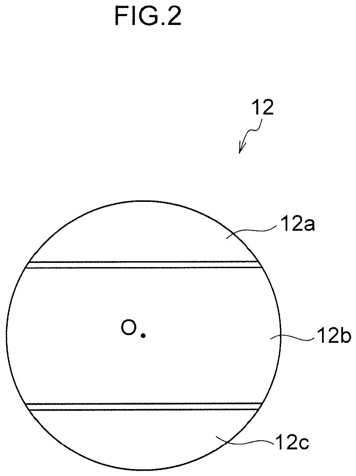

The taking lens 12 (multifocal lens and imaging means) is a multifocal lens (trifocal lens) having a region (hereinafter referred to as a near focal region) 12a with a short focal length for near distance picture taking, a region (hereinafter referred to as an intermediate focal region) 12b with a focal length longer than that of the near focal region and capable of taking pictures of humans and the like, and a region (hereinafter referred to as a far focal region) 12c with a focal length further longer than that of the intermediate focal region and capable of taking pictures of landscapes and the like. In the taking lens 12, as depicted in Figure 2, regions each in a half-moon shape when viewed from front are provided to upper and lower portions in Figure 2, and a band-shaped region including a lens center O is provided therebetween. These regions are, the near focal region 12a, the intermediate focal region 12b, and the far focal region 12c, in sequence from an upper portion. In the present embodiment, the intermediate focal region 12b with the largest area is a main region. In these regions, specific values of focal lengths may be set according to the purpose of picture taking and the like.

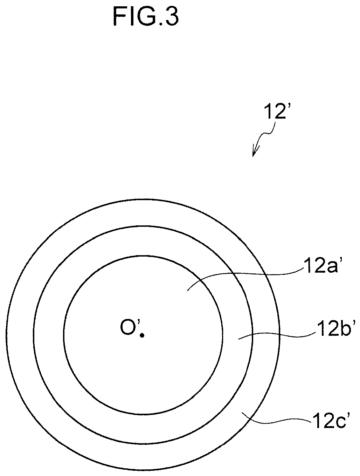

Note that while each focal region is formed in a half-moon shape or a band shape in the example of Figure 2, as in a taking lens 12' depicted in Figure 3, the taking lens may be formed of a circular region 12a' (intermediate focal region) including a lens center O' and peripheral annular-shaped regions 12b' and 12c' thereof (one is a near focal region and the other is a far focal region). Also, an area ratio among the near focal region 12a, the intermediate focal region 12b, and the far focal region 12c can be, for example, 30:50:20, but may be set at a ratio different from the above according to the characteristics of an optical system and the picture-taking purpose. Also, the number of focal regions is not restricted to three, and there may be two focal points or four or more focal points.

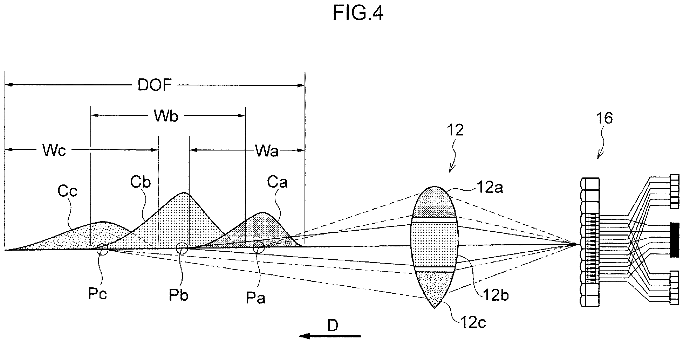

Figure 4 (imaging method and imaging program) is a a schematic diagram depicting a relation between a subject distance and a focusing degree in the taking lens 12. In Figure 4, focusing degree curves Ca, Cb, and Cc are curves indicating focusing degrees at a distance D in a near focal region 12a, an intermediate focal region 12b, and a far focal region 12c, respectively. Distances to points Pa, Pb, and Pc where the respective curves are at their peaks represents a focal distance of the taking lens 12 in each region, and the height of each curve corresponds to a focusing degree and the spread of each curve corresponds to a depth of field. Therefore, if the taking lens 12 is controlled so that the subject distance and any of Pa, Pb, and Pc match each other, the subject is accurately focused in the focal region. If the subject is present in the spread of any of of the curves Ca, Cb, and Cc (represented by Wa, Wb, and Wc, respectively), the subject is focused to some extent in the region according to the distance from each of Pa, Pb, and Pc. Also, if the subject is in the depth of field of the taking lens 12 as a whole, the subject is focused to some extent in any of the regions.

An area of a region surrounded by each of these curves corresponds to an area of each focal region. The shape of each curve, the degree of overlap with another curve, and a depth of field DOF of the taking lens 12 as a whole defined by these can be set according the characteristics of the optical system and the picture-taking purpose. These curves Ca, Cb, and Cc correspond to MTF (Modulation Transfer Function) curves of the respective regions.

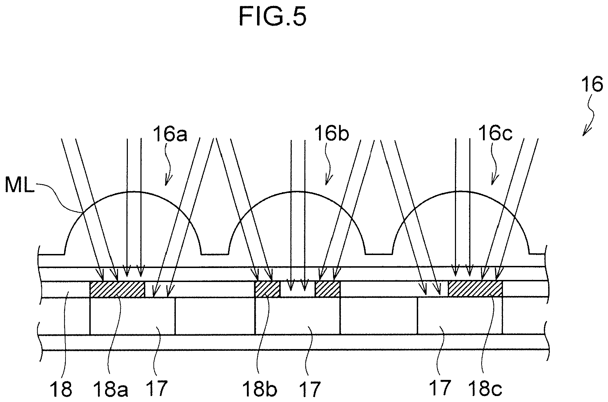

Light beams passing through the near focal region 12a, the intermediate focal region 12b, and the far focal region 12c of the taking lens 12 enter each photosensor of the CCD 16. As depicted in Figure 5, the CCD 16 has a near-image light-receiving cell 16a for receiving a light beam passing through the near focal region 12a of the taking lens 12, an intermediate-image light-receiving cell 16b for receiving a light beam passing through the intermediate focal region 12b thereof, and a far-image light-receiving cell 16c for receiving a light beam passing through the far focal region 12c. The light-receiving cells 16a, 16b, and 16c selectively receive light beams passing through the near focal region 12a, the intermediate focal region 12b, and the far focal region 12c, via a microlens ML and light-shielding films 18a, 18b, and 18c provided on the front surface of a light-receiving unit 17, respectively. For this reason, the light-shielding films 18a, 18b, and 18c have different shapes. Note that in place of providing light-shielding films on the front surface of the light-receiving unit 17, light-shielding member may be provided on the front surface of the microlens ML.

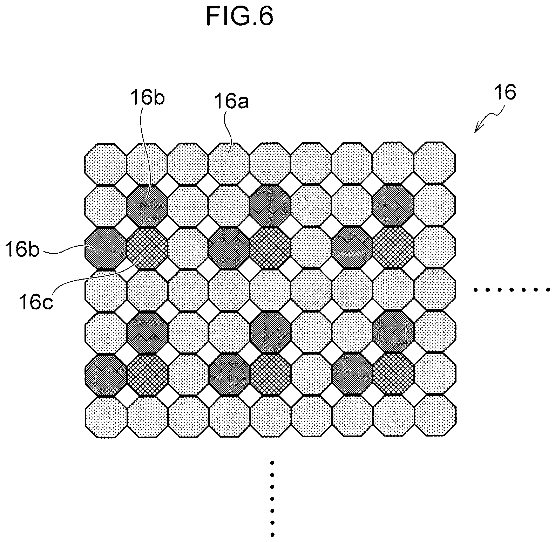

Note that, as depicted in Figure 6, the numbers of these light-receiving cells are provided at a ratio according to the areas of corresponding lens regions. In the present embodiment, the number of elements of the intermediate-image light-receiving cells 16b corresponding to the intermediate focal region 12b is the largest. In the present embodiment, an image obtained from the intermediate-image light-receiving cells 16b is a main image, and by increasing the number of intermediate-image light-receiving cells 16b according to the area ratio of the taking lens, a main image with high image quality can be obtained. Note that the numbers of light-receiving cells may be substantially substantially equal to the area ratio of the focal regions corresponding to the light-receiving cells. Also, the light-receiving cells are preferably arranged so that the image quality is not degraded in a specific region or direction in the obtained image. A dropout of pixel data because cells corresponding to a plurality of focal regions are mixed is preferably compensated for by interpolation or the like.

Also, the CPU 40 controls the aperture 14 via the aperture drive unit 34 and also controls a charge accumulation time (shutter speed) at a CCD 16 via a CCD control unit 32 and reading of an image signal from the CCD 16. The signal charge accumulated in the CCD 16 is read as a voltage signal according to the signal charge based on a read signal supplied from the CCD control unit 32, and is supplied to an analog signal processing unit 20.

An analog signal processing unit 20 samples and holds R, G, and B signals for each pixel by performing a correlated double sampling process on a voltage signal outputted from the CCD 16, and amplifies and then supplies the resultant signals to an A/D converter 21. The A/D converter 21 converts the sequentially inputted analog R, G, and B signals to digital R, G, and B signals for output to an image input controller 22.

A digital signal processing unit 24 performs predetermined signal processing on the digital image signals inputted via the image input controller 22, such as offset processing, gain control processing including white balance correction and sensitivity correction, gamma correction processing, and YC processing.

Image data processed in the digital signal processing unit 24 is outputted to a VRAM 50. The VRAM 50 includes an A region and a B region each for storing image data representing one frame. Image data representing one frame is alternately rewritten between the A region and the B region. From the region other than the region where image data is being rewritten, the written image data is read. The image data read from the VRAM 50 is encoded in a video encoder 28 and is outputted to the liquid-crystal monitor 30, thereby causing a subject image to be displayed on the liquid-crystal monitor 30.

In the liquid-crystal monitor 30, a touch panel is adopted, displaying the obtained image. Also, as will be described further below, with a user's operation via a screen, operations are possible, such as specifying a main subject and other subject, setting focusing priorities among subjects, specifying a blurred region, and the like.

Also, when a press at the first step (half press) of the shutter button of the operating unit 38 is provided, the CPU 40 starts an AF operation (focusing state control step), controlling a focusing state of the taking lens 12 via the lens drive unit 36. Also, image data outputted from the A/D converter 21 at the time of a half press of the shutter button is captured into an AE detecting unit 44.

The CPU 40 calculates a brightness (picture-taking Ev value) of the subject from an integrated value of G signals inputted from the AE detecting unit 44, determines an aperture value and an electronic shutter (shutter speed) of the CCD 16 based on this picture-taking Ev value and, based on the result, controls a charge accumulation time at the aperture 14 and the CCD 16.

An AF processing unit 42 (focusing state control means) is a portion where a phase-difference AF process is performed, controlling a focus lens in the taking lens 12 so that a defocus amount found from a phase difference in image data between a main picture element and a sub-picture element in a predetermined focus region of image data.

When the AE operation and the AF operation end and a press of the shutter button at the second step (full press) is provided, image data outputted from the A/D converter 21 in response to the press is inputted from the image input controller 22 to a memory (SDRAM) 48 and is temporarily stored therein.

After temporary storage in the memory 48, an image file is generated after signal processing at the digital signal processing unit 24 such as YC processing, compression processing to a JPEG (joint photographic experts group) format at a compression/decompression processing unit 26, etc. The image file is read by a media controller 52 and recorded on a memory card 54. The image recorded on the memory card 54 can be replayed and displayed on the liquid-crystal monitor 30 by operating the replay button of the operating unit 38.

### [Imaging Process in the Present Invention]

### <First Embodiment>

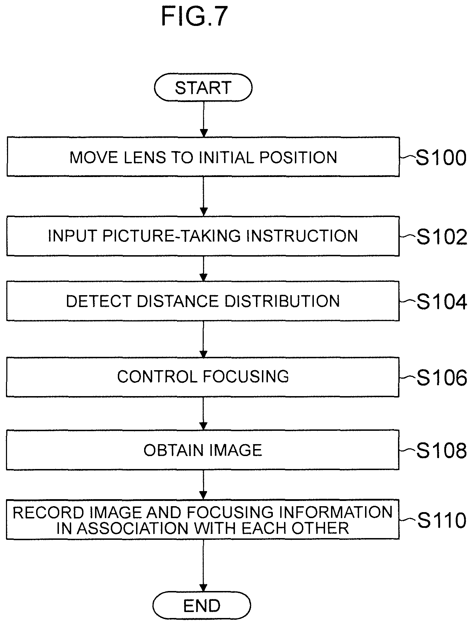

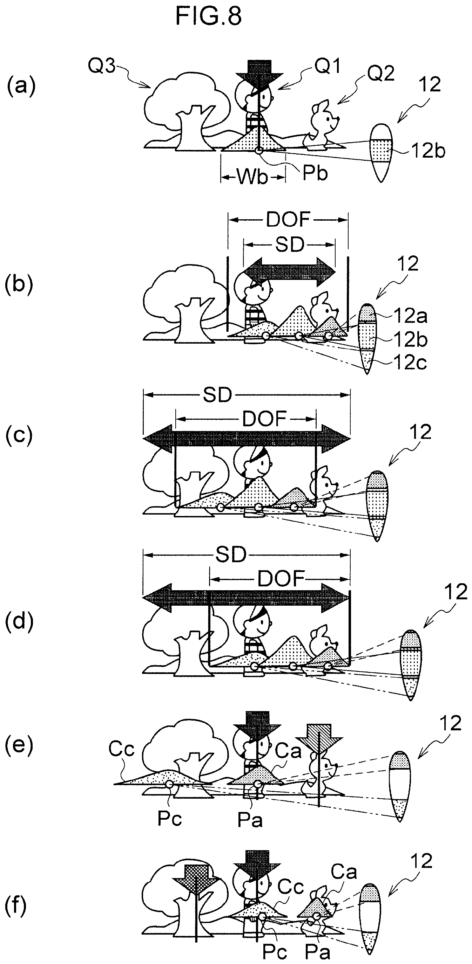

Next, an imaging process performed by the above-structure imaging device 10 is described. Figure 7 (imaging method and imaging program) is a flowchart of the imaging process according to a first embodiment of the present invention, and execution is controlled by the CPU 40 based on a program (imaging program) stored in the EEPROM 46 (recording medium). In the first embodiment, an image is obtained by controlling so that a main subject is focused in the intermediate focal region 12b as a main region. Imagery of the imaging process is depicted in (a) to (f) of Figure 8 (imaging method and imaging program). In (a) of Figure 8, the main subject is a child Q1, and a dog Q2 and a wood Q3 are other subjects. Note in (a) of Figure 8 that the focal regions 12a and 12c and the focal curves Ca and Cc corresponding thereto are not depicted.

When the imaging process is started, the lens is first moved to an initial position (S100). Any initial position can be set. For example, a lens position where the subject at a distance of 2 m is focused in the intermediate focal region 12b as a main region can be set as an initial position. When the taking lens 12 is moved to the initial position, picture taking is ready. When the user presses the shutter button of the operating unit 38 to input a picture-taking instruction (S102), a distance distribution of a subject is detected (S104) based on an aperture value of the aperture 14. Based on the detected distance distribution, the child Q1 as a main subject is focused in the main region (S106; focusing state control step). In this state, the child Q1 is in a width Wb of the intermediate focal region 12b (also in the range of the depth of field DOF of the taking lens 12 as a whole), and the position of the child Q1 matches with the position of the peak Pb of the curve Cb. Note that a determination as to whether the subject is a main subject at S106 can be made by determining whether the subject is a human face, based on a ratio occupying a picture-taking region, or by the user specifying via the liquid-crystal monitor 30.

Note in the first embodiment that the distance distribution can be detected by any of various methods. For example, as described in Japanese Patent Application Laid-Open No. 2011-124712, calculation may be performed by using phase difference information or by comparing contrasts of a plurality of imaging signals obtained at different lens positions. The same goes for second to fourth embodiments, which will be described further below.

After focusing control at S106, an image is obtained (S108; imaging step), and the obtained image is recorded in association with focusing information (such as the width of the distance distribution of the subject, the depth of field of the taking lens 12, and the focusing degree of the subject) in the memory card 54 (S110). This allows extraction and combining of images with reference to focusing degree information, which will be described further below.

Note that when moving-picture taking is performed in the first embodiment, the processes at S104 to S110 are continuously performed to obtain and record images according to the movement of the main subject (that is, changes of the distance distribution).

### <Second Embodiment>

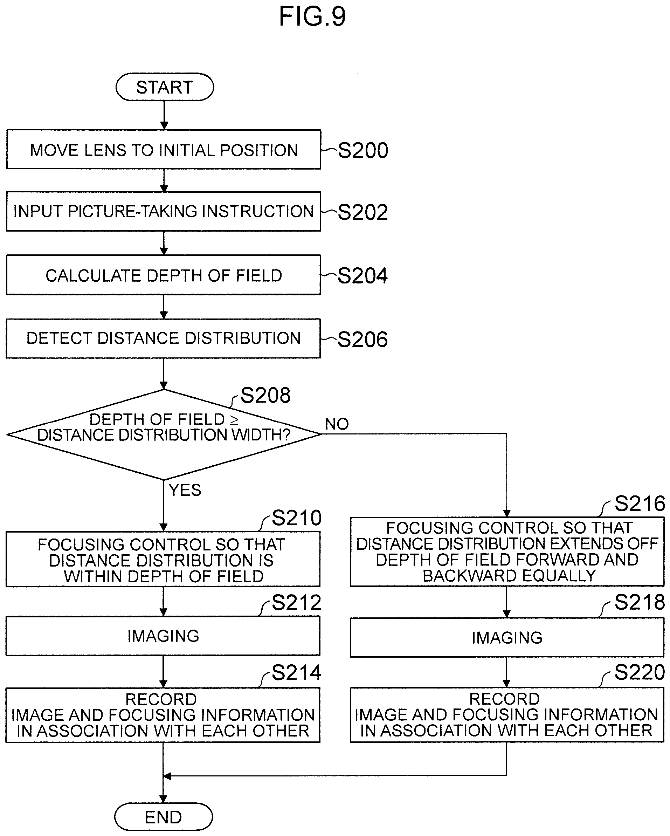

Figure 9 (imaging method and imaging program) is a flowchart of the imaging process according to a second embodiment of the present invention, and execution is controlled by the CPU 40 based on a program stored in the EEPROM 46. In the second embodiment, focusing control is performed according to whether the depth of field of the taking lens 12 is equal to the width of the distance distribution of the subject or more.

When an imaging process is started, the CPU 40 moves the taking lens 12 to an initial position (S200). When a picture-taking instruction is inputted (S202), the depth of field DOF of taking lens 12 as a whole is calculated based on the aperture value of the aperture 14 (S204), and a distance distribution of the subject is next detected (S206). As a result, when the depth of field DOF is equal to the width SD of the distance distribution of the subject or more (YES at S208), the procedure proceeds to S210 (focusing state control step), where focusing control is performed so that the width SD is within the depth of field DOF, as depicted in (b) of Figure 8.

How the width SD of the distance distribution of the subject is covered by the depth of field DOF as the multifocal lens as a whole at the time of focusing control at S210 can be defined according to the degree of difference in breadth between DOF and SD or the picture-taking purpose. For example, with the width SD of the distance distribution set within the depth of field DOF, control may be performed so that the center of DOF and the center of SD match each other or so that the focusing degree in any of the focal regions with respect to a specific subject such as a main subject is maximum.

After focusing control at S210, imaging is performed (S212; imaging step), and the obtained image and focusing degree information and focusing information (such as the width of the distance distribution of the subject, the depth of field of the taking lens 12, and the focusing degree of the subject) regarding the respective subjects Q1 to Q3 are recorded in association with each other in the memory card 54 (S214).

On the other hand, when the depth of field DOF is narrower than the width SD of the distance distribution of the subject (NO at S208), the procedure proceeds to S216 (focusing state control step), where an image is obtained with focusing control so that SD extends off the depth of field forward and backward equally (S218; imaging step), and the obtained image and the focusing degree information of the respective subjects Q1 to Q3 are recorded in association with each other in the memory card 54 (S220).

Note that when moving-picture taking is performed in the second embodiment, the processes at S204 to S214 or S204 to S220 are continuously performed.

As such, in the second embodiment, focusing control is performed according to whether the depth of field DOF of the taking lens 12 as a whole is equal to the width SD of the distance distribution of the subject or more to obtain an image. Therefore, an appropriately focused image can be obtained according to the distance distribution of the subject.

### <Third Embodiment>

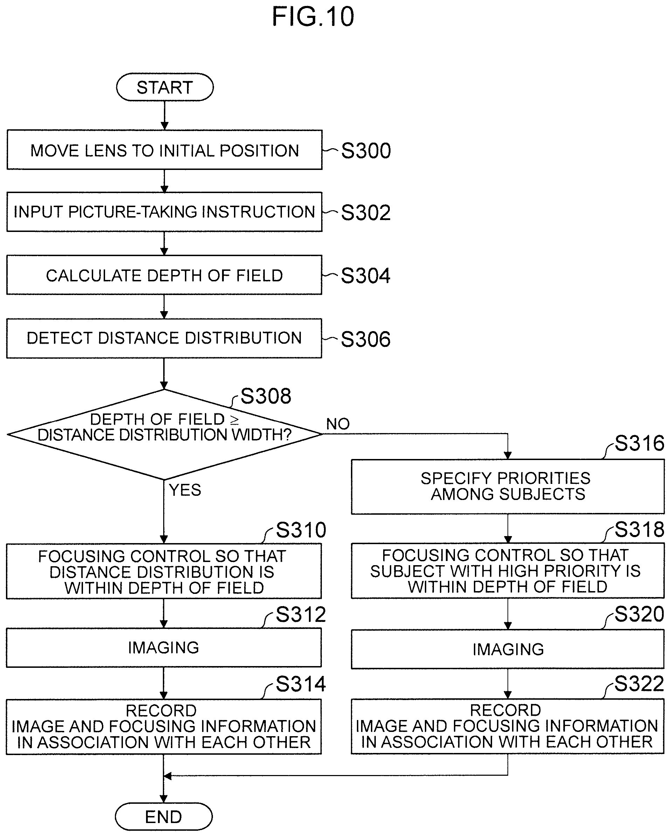

Figure 10 (imaging method and imaging program) is a flowchart of the imaging process according to a third embodiment of the present invention, and execution is controlled by the CPU 40 based on a program stored in the EEPROM 46. In the third embodiment, as with the second embodiment, focusing control is performed according to whether the depth of field of the taking lens 12 is equal to the width of the distance distribution of the subject or more. However, as different from the second embodiment, when the depth of field DOF is narrower than the width SD of the distance distribution of the subject, the focusing control is performed based on a focusing priority order among the subjects to obtain an image.

In the flowchart of Figure 10, processes at S300 to S314 are similar to those at S200 to S214 in the flowchart of Figure 9. Note that, as with the second embodiment, the depth of field DOF of the taking lens 12 as a whole is calculated at S204 based on the aperture value of the aperture 14.

In the flowchart of Figure 10, when the depth of field DOF is narrower than the width SD of the distance distribution of the subject (NO at S308), the procedure first proceeds to S316, where priorities among the subjects are specified. Priorities may be specified by performing face detection on an imaging device 10 side and setting the priority order of a person with the detected face higher than that of the subject other than that person or by accepting the specification of the user via the liquid-crystal monitor 30 having a touch panel function.

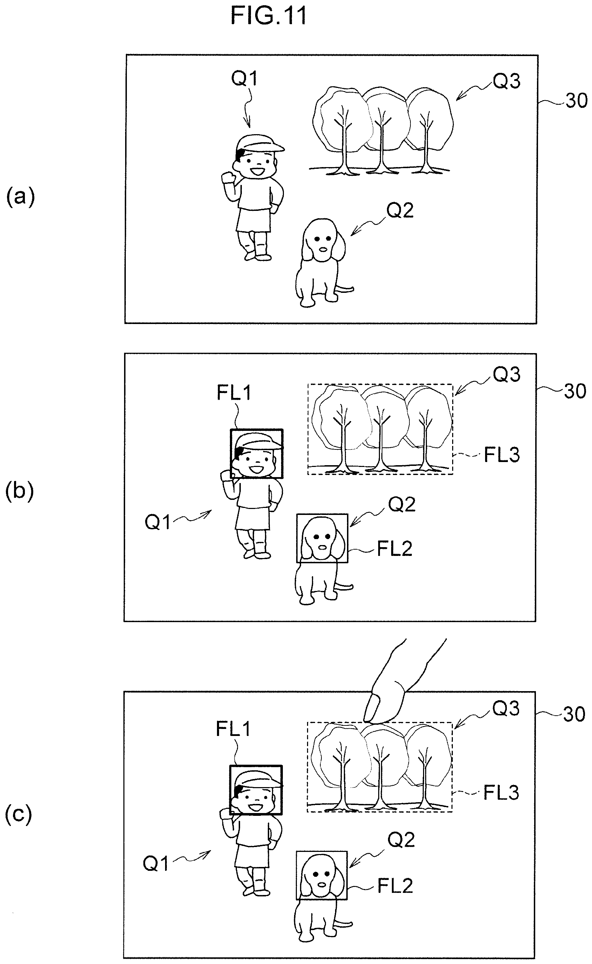

Examples of the priority setting described above are depicted in (a) to (c) of Figure 11. When the child Q1, the dog Q2, and the woods Q3 are present as subjects as in (a) of Figure 11, an example in which face detection is performed on the imaging device 10 side for priority ranking is depicted in (b) of Figure 11. In this example, the child Q1 is a main subject, the dog Q2 is the second in priority ranking, and the wood Q3 is the third in priority ranking. These subjects Q1, to Q3 are provided with a frame FL1 (a thick solid line), a frame FL2 (a thin solid lien), and a frame FL3 (a dotted line) according to the priority ranking, and the user can confirm the priority ranking among the subjects. Note that the size, position, ON/OFF of display, and others of the frames FL1 to FL 3 may be changed by the user operating on the liquid-crystal monitor 30.

An example in which the user sets priority ranking among subjects is depicted in (c) of Figure 11. In (c) of Figure 11, the priority ranking is set according to the order in which the user touches (here, the order is assumed to be the child Q1, the dog Q2, and then the woods Q3), and the frames FL1 to FL3 are displayed as with (b) of Figure 11.

When the priority ranking is set at S316 in the above-described manner, the procedure proceeds to S318 (focusing state control step), where focusing control is performed so that the subject with higher priority ranking is within the depth of field DOF of the taking lens 12. Note in this focusing control that any of various schemes can be adopted to determine how control is further performed, with the subject with higher priority ranking being within the depth of field DOF of the taking lens 12. For example, the subject Q1 with the first priority ranking can be accurately focused in any of the focal regions of the taking lens 12 or, as depicted in (d) of Figure 8, the subject Q2 with the second priority ranking can be within the depth of field DOF while the focusing degree of the subject Q1 with the first priority ranking is increased as high as possible. Alternatively, the subjects as many as possible may be within the depth of field DOF.

When the focusing control ends, an image of the subject is obtained (S320; imaging step), and the obtained image and the focusing information the focusing information (such as the width of the distance distribution of the subject, the depth of field of the taking lens 12, and the focusing degree of the subject) are recorded in association with each other in the memory card 54 (S322).

Note that when moving-picture taking is performed in the third embodiment, the processes at S304 to S322 are continuously performed.

As such, in the third embodiment, an image appropriately focused according to the distance distribution of the subject can be obtained.

### <Fourth Embodiment>

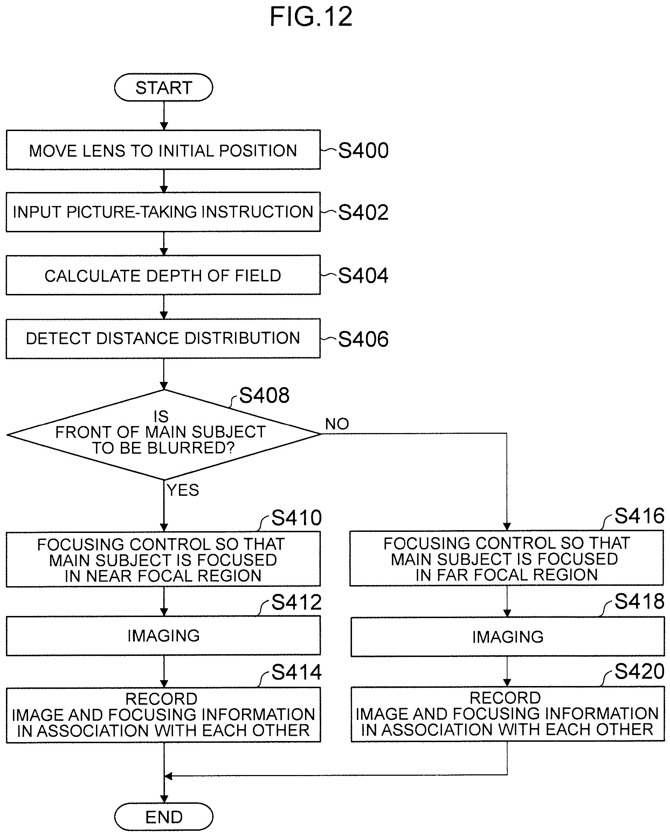

Figure 12 (imaging method and imaging program) is a flowchart of the imaging process according to a fourth embodiment of the present invention, and execution is controlled by the CPU 40 based on a program stored in the EEPROM 46. In the fourth embodiment, an image with a region on a front side or a deep side of the main subject blurred is obtained.

In the flowchart of Figure 12, processes at S400 to S406 are similar to those at S200 to S206 in the flowchart of Figure 9 and those at S300 to S306 in the flowchart of Figure 10. Note that, as with the second and third embodiments, the depth of field DOF of the taking lens 12 as a whole is calculated at S404 based on the aperture value of the aperture 14.

In the flowchart of Figure 12, when the processes up to S406 end, it is determined whether to blur the front of the main subject (S408). When it is determined to blur the front of the main subject by a user's instruction input via the operating unit 38 or the liquid-crystal monitor 30 (YES at S408), the CPU 40 performs control so that the child Q1 as the main subject is focused in the near focal region 12a of the taking lens 12 as depicted in (e) of Figure 8 (S410; focusing state control step), and imaging is performed (S412; imaging step). The image obtained by imaging is recorded in association with the focusing information in the memory card 54 (S414). With the above-described imaging process, a subject on a side deeper than the child Q1 (for example, the wood Q3) is focused within the range of the depth of field DOF of the taking lens 12, but a subject in front of the child Q1 (for example, the dog Q2) is blurred according to the distance from the child Q1. Note in (e) of Figure 8 that the intermediate focal region 12b in the taking lens 12 and its corresponding focusing degree curve Cb are not depicted.

On the other hand, when it is determined to blur the depth side of the main subject (NO at S408), the CPU 40 performs control so that the child Q1 as the main subject is focused in the far focal region 12c of the taking lens 12 as depicted in (f) of Figure 8 (S416; focusing state control step), and imaging is performed (S418; imaging step). The image obtained by imaging is recorded in association with the focusing information in the memory card 54 (S420). With the above-described imaging process, a subject in front of the child Q1 (for example, the dog Q2) is focused within the range of the depth of field DOF of the taking lens 12, but a subject on a side deeper than the child Q1 (for example, the wood Q3) is blurred according to the distance from the child Q1. Note in (f) of Figure 8 that the intermediate focal region 12b in the taking lens 12 and its corresponding focusing degree curve Cb are not depicted.

As such, in the fourth embodiment, the user can obtain a desired image, with the front side or the deep side of the main subject blurred according to the picture-taking purpose. Note that the user may be prompted to specify a blurring target region via the liquid-crystal monitor 30 for focusing control so that that region is blurred and then imaging.

### [Image Processing in the Present Invention]

Next, extraction and combining of images obtained with the above-described scheme are described.

### <Fifth Embodiment>

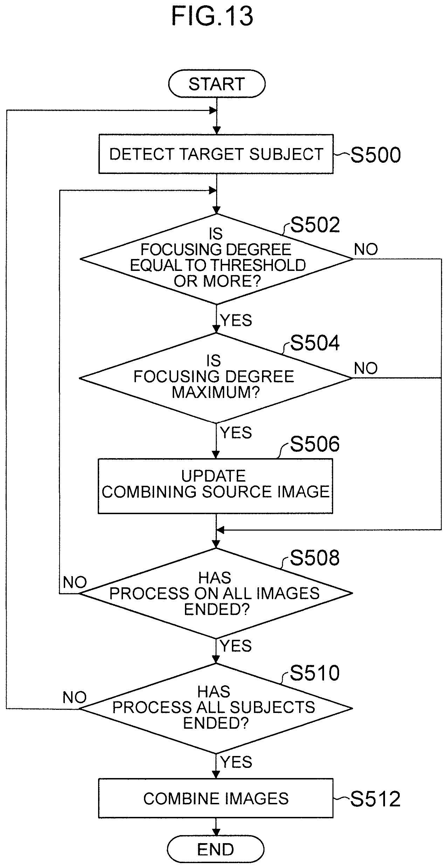

Figure 13 (image processing method and image processing program) is a flowchart of image processing according to a fifth embodiment of the present invention, and execution is controlled by the CPU 40 based on a program (image processing program) stored in the EEPROM (recording medium) 46. In the flowchart of Figure 13, the case is described in which an image is extracted from among images obtained with the scheme according to any of the first to fourth embodiments described above and, from the extracted image, a new image is generated by combining so that all subjects have a focusing degree equal to a threshold or more.

First at S500, an image including a subject as a target (here, the case is described in which the child Q1, the dog Q2, and the woods Q3 are present as in (a) to (c) of Figure 11) is detected in images recorded in the memory card 54. When the subject as a target, for example, the child Q1, is detected, a focusing degree of that target subject is detected, and it is determined whether the focusing degree is equal to a threshold or more (S502). As described in the first to fourth embodiments, since the images and the imaging information (such as the width of the distance distribution of the subject, the depth of field of the taking lens 12, and the focusing degree of the subject) are recorded in association with each other in the memory card 54, the focusing degree of the target subject can be detected with reference to this focusing information. Note that a value set on the imaging device 10 side may be used as the threshold, or a value specified by the user via the operating unit 38 may be used. Also, a threshold may be set for each subject.

When the focusing degree of the detected target subject is equal to the threshold or more (YES at S502), the procedure proceeds to 504, where it is determined whether the detected focusing degree is maximum. When it is determined that the focusing degree is maximum (YES at S504), updating is performed with the process target image being taken as a combining source image regarding the target subject, and the procedure then proceeds to S508, where it is determined whether all images have been processed. Note that when NO is determined at S502 or S504, the procedure proceeds to S508 without updating the combining source image. When YES is determined at S508, the procedure proceeds to S510. When NO is determined, the processes at S502 to S506 are repeated until the process on all images ends. With this, an image with a focusing degree of the target subject being equal to the threshold or more and maximum is extracted from the images recorded in the memory card 54.

When the image extracting process for one target subject ends in this manner, it is determined whether the process on all subjects has ended (S510). In the example depicted in (a) to (c) of Figure 11, while the extracting process regarding the child Q1 has ended, the determination at S510 is NO until the process regarding the dog Q2 and the woods Q3 ends, and the processes at S500 to S508 are repeated for Q2 and Q3. When the determination at S510 is YES (that is, when the extracting process regarding all subjects ends), image combining is performed at S512. This image combing is a process of extracting, for each target subject, a portion of the target subject from the extracted image and combining these portions as one image.

As such, in the fifth embodiment, an image with all subjects having a focusing degree equal to the threshold or more can be obtained by combining. Note that image extraction and combining may be performed by displaying an image before the process and an image after the process on the liquid-crystal monitor 30.

### <Sixth Embodiment>

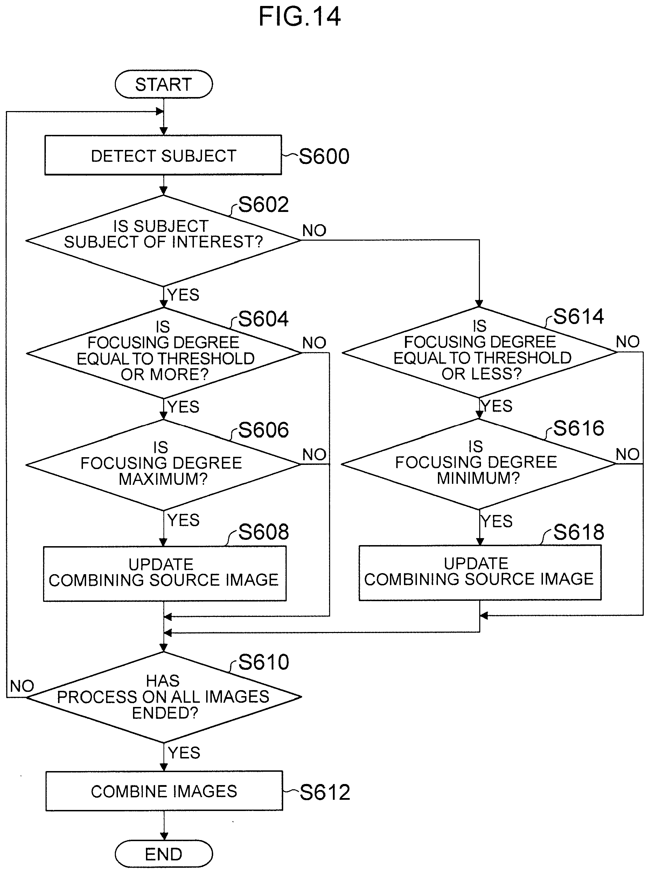

Figure 14 (image processing method and image processing program) is a flowchart of image processing according to a sixth embodiment of the present invention, and execution is controlled by the CPU 40 based on a program (image processing program) stored in the EEPROM 46. In the flowchart of Figure 14, the case is described in which an image is extracted from images obtained with the scheme according to any of the first to fourth embodiments described above and a new image is obtained by combining so that the focusing degree of a specific subject (subject of interest) is equal to a threshold or more and the focusing degrees of each of other subjects are each equal to the threshold or less (for example, the case in which the main subject has a high focusing degree, and the other subjects each have a low focusing degree).

First at S600, an image including a subject as a target (here, the case is described in which the child Q1, the dog Q2, and the woods Q3 are present as in (a) to (c) of Figure 11) is detected in images recorded in the memory card 54. When a subject as a target is detected, it is then determined whether the detected subject is a subject of interest (S602). In the example in (a) to (c) of Figure 11, the child Q1 as a main subject can be specified by the user as a subject of interest, but another subject may be specified as a subject of interest. When the detected subject is a subject of interest, the procedure proceeds to S604. When the detected subject is not a subject of interest (NO at S602), the procedure proceeds to S614.

At S604, the focusing degree of the subject of interest is detected to determine whether the focusing degree is equal to a threshold or more. As described in the first to fourth embodiments described above, since the images and the imaging information (such as the width of the distance distribution of the subject, the depth of field of the taking lens 12, and the focusing degree of the subject) are recorded in association with each other in the memory card 54, the focusing degree of the subject of interest can be detected with reference to this focusing information. Note that a value set on the imaging device 10 side may be used as the threshold, or a value specified by the user via the operating unit 38 may be used. Also, a threshold may be set for each subject.

When the focusing degree of the subject of interest is equal to the threshold or more (YES at S604), the procedure proceeds to 606 to determine whether the detected focusing degree is maximum. When it is determined that the focusing degree is maximum (YES at S606), the process target image is updated as a combining source image (S608), and the procedure then proceeds to S610 to determine whether all images have been processed. When NO is determined at S604 and S606, the procedure proceeds to S610 without updating the combining source image. When the determination result is YES at S610, the procedure proceeds to S612. When the determination result is NO, the processes at S600 to S608 are repeated until the process on all images ends. With this, an image with the focusing degree of the subject of interest is equal to the threshold or more and maximum is extracted from among the images recorded in the memory card 54.

On the other hand, when the detected subject is not a subject of interest and the procedure proceeds to S614, it is determined whether the focusing degree is equal to the threshold or less. When the determination result is YES, the procedure proceeds to S616 to determine whether the focusing degree is minimum. When the determination result is YES, the procedure proceeds to S618, where the process target image is updated as a combining source image regarding a subject other than the subject of interest, and the procedure then proceeds to S610. Note that when NO is determined at S614 and S616, the procedure proceeds to S610 without updating the combining source image.

When the image extracting process for one target subject ends in this manner, it is determined whether the process on all subjects has ended (S610). When the determination at S610 is YES, image combining is performed at S612. This image combing is a process of extracting, for each target subject, a portion of the target subject from the extracted image and combining these portions as one image. As described above, since the image with a high focusing degree is extracted as the subject of interest and images with a low focusing degree are extracted as other subjects, a new image is obtained by combining so that the focusing degree of the subject of interest is equal to the threshold or more and the focusing degrees of the other subjects is equal to the threshold or less. Note that image extraction and combining may be performed by displaying an image before the process and an image after the process on the liquid-crystal monitor 30.

Note in the fifth and sixth embodiments that when image extraction and combining is performed for a moving image, a reference value of extraction (a threshold of the focusing degree) may be changed at each time. For example, instead of extracting an image with a focusing degree equal to the fixed threshold or more at all times, an image with a low focusing degree may be extracted at first, and an image with a high focusing degree may be gradually extracted as time elapses. When the images extracted in this manner are replayed as moving pictures, the subject initially blurred gradually becomes clear, and natural moving images can be obtained when abrupt focusing may provide uncomfortable feelings. Conversely, images may be extracted so that the focused subject may be gradually blurred. Such a time-varying reference value (threshold) may be set by the imaging device, or a value set by the user via the liquid-crystal monitor 30 or the operating unit 38 may be used.

In the above-described embodiment, description is made in which the imaging device 10 is a device performing an imaging process and image processing. However, the imaging process and image processing according to the present invention are not restricted to be performed by the imaging device, and can be performed at a camera-equipped portable telephone, a personal computer (PC), a portable game machine, or the like.

### <Seventh Embodiment>

### [Structure of Imaging Device]

Next, a seventh embodiment of the present invention is described. The structure of the imaging device 10 (imaging device and image processing device) according to the seventh embodiment is similar to that of the imaging device 10 according to the first to sixth embodiments described above (refer to Figure 1 to 3, 5, 6, etc.), and therefore detailed description is omitted and differences from these embodiments are now described.

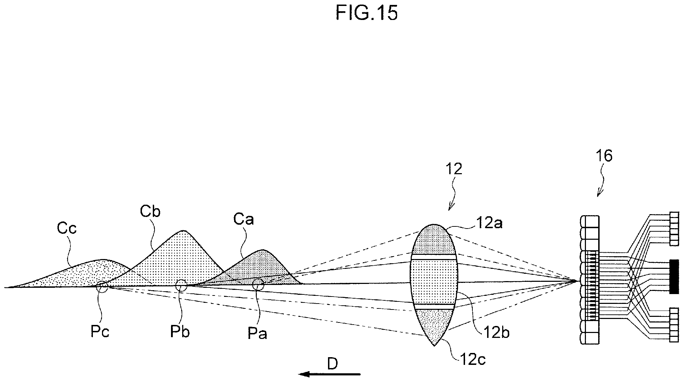

Figure 15 (imaging method and imaging program) is a schematic diagram depicting a relation between a subject distance and a focusing degree in the taking lens 12 (multifocal lens). In Figure 15, focusing degree curves Ca, Cb, and Cc are curves indicating focusing degrees at a distance D in a near focal region 12a, an intermediate focal region 12b, and a far focal region 12c, respectively. Distances to points Pa, Pb, and Pc where the respective curves are at their peaks represents a focal distance of the taking lens 12 in each region, and the height of each curve corresponds to a focusing degree and the spread of each curve corresponds to a depth of field. Therefore, if the taking lens 12 is controlled so that the subject distance and Pa, Pb, and Pc match each other, the subject is focused via each focal region. If the subject is present in the spread of each of the curves Ca, Cb, and Cc, the subject is focused in each of the regions according to the distance from each of Pa, Pb, and Pc. An area of a region surrounded by each of these curves corresponds to an area of each focal region. The shape of each curve and the degree of overlap with another curve can be set according the characteristics of the optical system and the picture-taking purpose. In the present embodiment, the focusing degree curves Ca, Cb, and Cc are set so as to cover from a near distance equal to 1 m or less to a far distance (infinity). Note that these curves Ca, Cb, and Cc correspond to MTF (Modulation Transfer Function) curves of the respective regions.

### [Imaging Process]

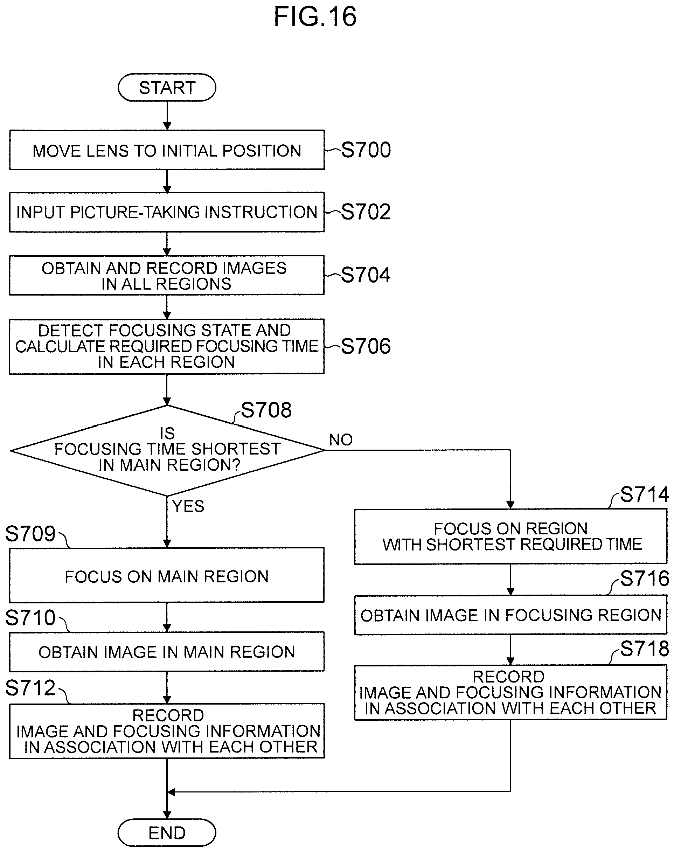

Next, an imaging process performed by the above-structured imaging device 10 is described. Figure 16 (imaging method and imaging program) is a flowchart of an imaging process when still-picture taking is performed, and execution is controlled by the CPU 40 based on a program (imaging program) stored in the EEPROM 46 (recording medium). When an imaging process is started, the CPU 40 moves the taking lens 12 to an initial position (S700). When a picture-taking instruction is inputted (S702), images are obtained and recorded in all regions with the lens position at the time of the picture-taking instruction being kept (S704). When the images obtained at S704 are recorded, focusing information, which will be described further below, may be recorded in association with each other. Next, the CPU 40 detects a focusing state of the taking lens 12, and times required for focusing at the respective focal regions 12a, 12b, and 12c are calculated (S706). As the result of calculation of the focusing times, when the focusing time in the main region is the shortest (YES at S708), focusing control on the main region of the main subject (S709; focusing state control step) is performed to obtain an image (S710; imaging step), and the obtained image and the focusing information are recorded in association with each other in the memory card 54 (S712). On the other hand, when the focusing time is not the shortest in the main region (NO at S708), the procedure proceeds to S714, where the taking lens 12 is controlled so as to be focused via a region with the shortest required focusing time (S714; focusing state control step) to obtain an image (S716; imaging step), and the obtained image and the focusing information are recorded in association with each other in the memory card 54 (S718).

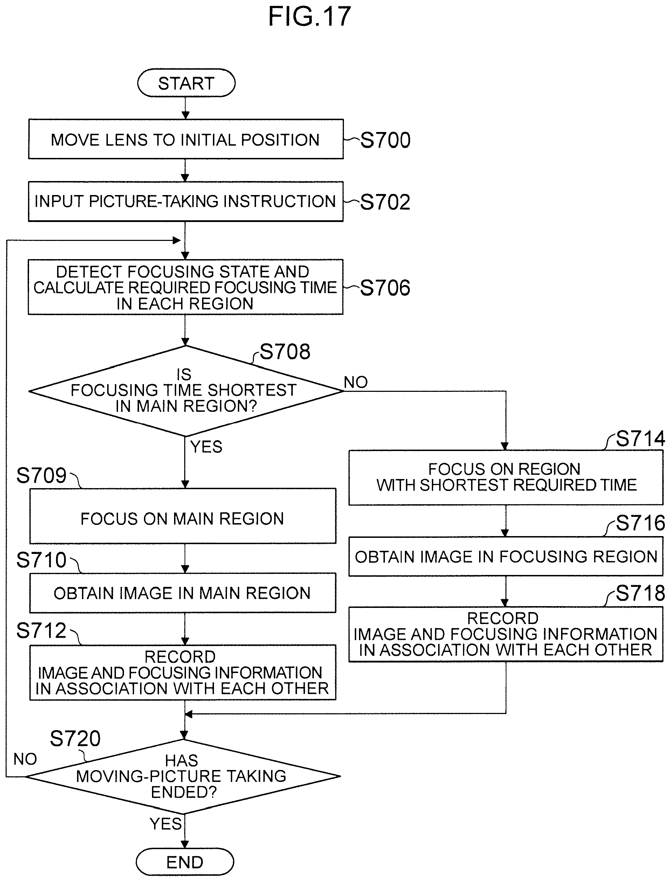

When moving-picture taking is performed in the seventh embodiment, processes at S706 to S716 as depicted in Figure 17 (imaging method and imaging program) are repeated until the end of moving-picture taking (NO at S720). Other processes are similar to those of the flowchart of Figure 16.

Note in the imaging process that the time required for focusing can be calculated from a lens position at the time of a picture-taking instruction, an in-focus lens position, and a lens moving speed.

With the processes as described above, in the seventh embodiment, the main subject is focused via a region with the shortest required focusing time according to a picture-taking instruction to obtain an image. Therefore, the focused image at high speed (without a time lag) can be obtained. Also, since the main subject is focused via any of the focal region, the accurately focused image can be obtained.

### <Eighth Embodiment>

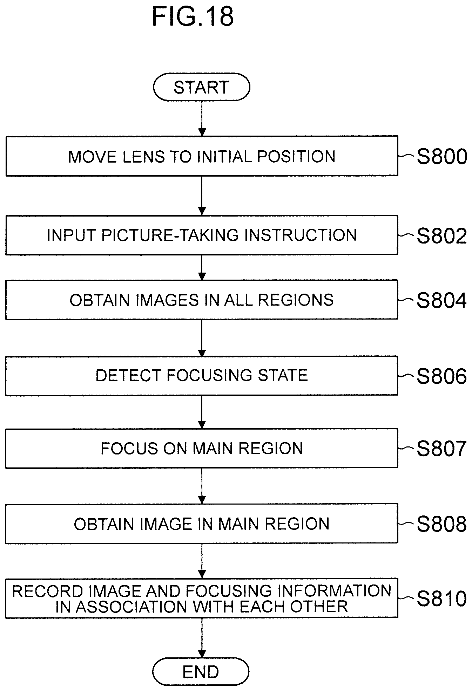

Next, an eighth embodiment of the imaging process according to the present invention is described. Figure 18 (imaging method and imaging program) is a flowchart of an imaging process when still-picture taking is performed, and execution is controlled by the CPU 40 based on a program (imaging program) stored in the EEPROM 46 (recording medium).

When an imaging process is started, the CPU 40 moves the taking lens 12 to an initial position (S800). When a picture-taking instruction is inputted (S802), images are obtained and recorded in all regions with the lens position at the time of the picture-taking instruction being kept (S804; imaging step). When the images obtained at S804 are recorded, focusing information, which will be described further below, may be recorded in association with each other. Next, the CPU 40 detects a focusing state of the taking lens 12 (S806), and the main subject is focused via a main region (S807; focusing state control step) to obtain an image (S808; imaging step), and the obtained image and the focusing information are recorded in association with each other in the memory card 54 (S810).

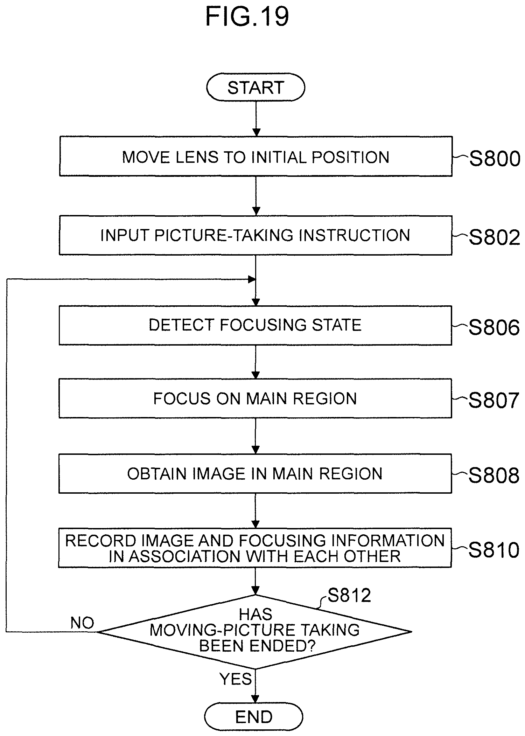

When moving-picture taking is performed, processes at S806 to S810 as depicted in a flowchart of Figure 19 (imaging method and imaging program) are repeated until the end of moving-picture taking (NO at S812). Other processes are similar to those of the flowchart of Figure 18.

With the processes as described above, in the eighth embodiment, the main subject is focused via the main region according to a picture-taking instruction to obtain an image. Therefore, the accurately focused image with high image quality can be obtained.

### <Ninth Embodiment>

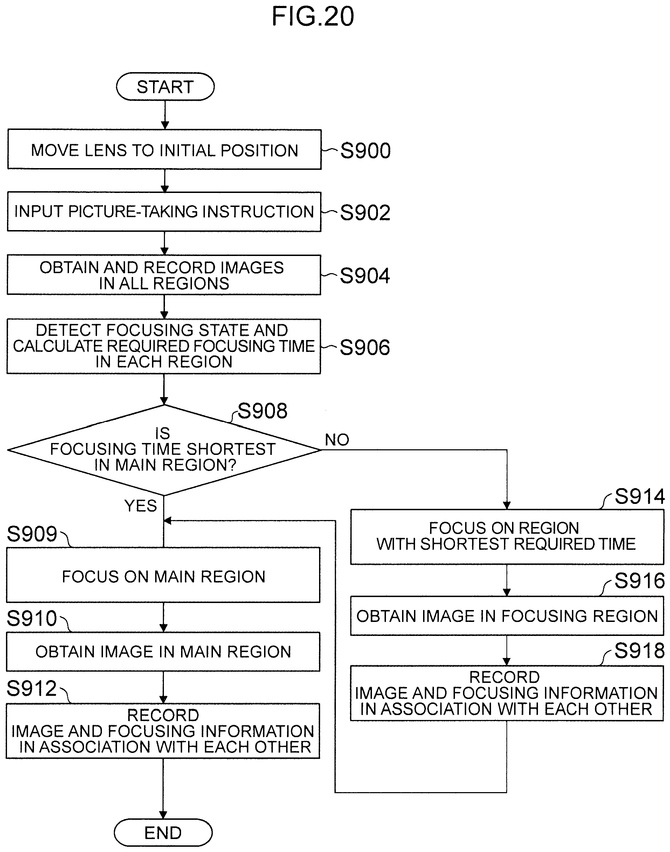

Next, a ninth embodiment of the imaging process according to the present invention is described. Figure 20 (imaging method and imaging program) is a flowchart of an imaging process when still-picture taking is performed, and execution is controlled by the CPU 40 based on a program (imaging program) stored in the EEPROM 46. As will be described below, in the ninth embodiment, imaging is first performed in a focal region with the shortest required focusing time. When the focal region with the shortest required focusing time is not a main region, imaging in the main region is further performed.

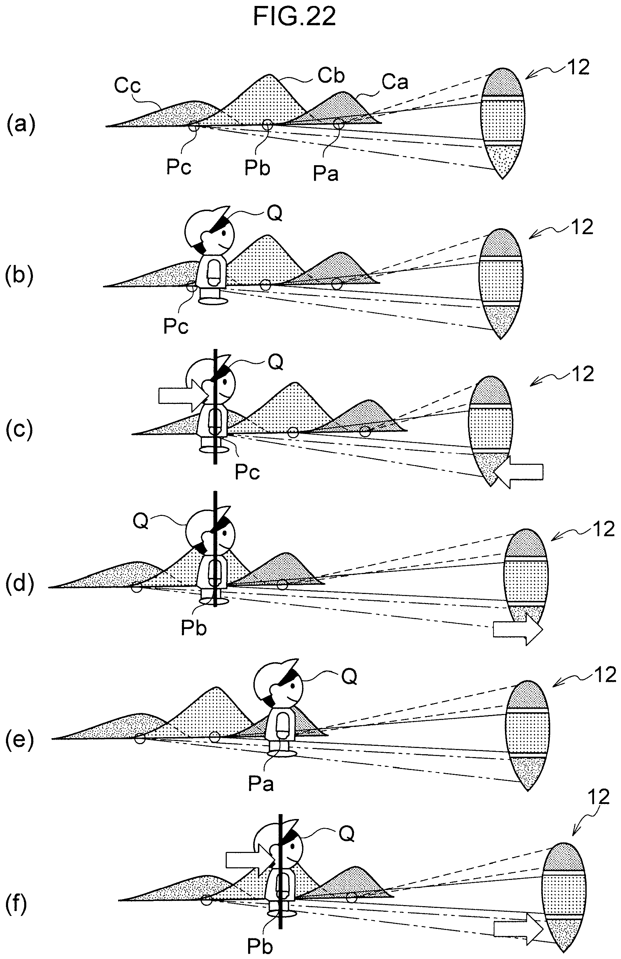

When the imaging process is started, the CPU 40 moves the taking lens 12 to an initial position (S900). This state is schematically depicted in (a) of FIG. 22. Any initial position can be set. For example, a lens position where the subject at a distance of 2 m is focused in the intermediate focal region 12b as a main region can be set as an initial position. When the taking lens 12 is moved to the initial position, picture taking is ready. When a picture-taking instruction is inputted (S902), images are obtained and recorded in all regions (that is, in all of the near focal region 12a, the intermediate focal region 12b, and the far focal region 12c) with the lens position at the time of the picture-taking instruction being kept (S904; imaging step). Here, as described regarding Figure 15, each focal region of the taking lens 12 covers from a near distance to a far distance. Therefore, as depicted in (b) of Figure 22, when a main subject Q is located between the peak Pc of the far focal region and the peak Pb of the intermediate focal region and is not completely focused in any of the focal regions, the main subject Q is in focus to some extent in any of the focal regions even an image is obtained with the lens position at the time of the picture-taking instruction being kept (that is, even if an image is obtained without performing focusing control). Therefore, an image with a predetermined image quality can be obtained at high speed. Note that when the image obtained at S304 is recorded, the focusing information, which will be described further below, may be recorded in association with each other.

Next, the CPU 40 detects the focusing state of the taking lens 12, and calculates a time required for focusing at each focusing region (S906). As a result of calculation of the focusing time, when the focusing time in the main region (the intermediate focal region 12b) is the shortest (YES at S908), the procedure proceeds to S909, where focusing control of the main region is performed to obtain an image (S910; imaging step), and the obtained image and the focusing information are recorded in association with each other in the memory card 54 (S912). On the other hand, when the focusing time in the main region is not the shortest (NO at S908), the taking lens 12 is controlled so that focusing is achieved via a region with the shortest required focusing time (S914; focusing state control step) to obtain an image (S916; imaging step), and the obtained image and the focusing information are recorded in association with each other in the memory card 54 (S918). In the example depicted in (a) to (f) of Figure 22 (imaging method and imaging program), the main subject Q is located at a distance nearest to the peak Pc, and the focusing time in the far focal region 12c is the shortest. Therefore, as depicted in (c) of Figure 22, focusing is achieved via the far focal region 12c to obtain an image (S914 and S916), and then, as depicted in (d) of Figure 22, focusing is achieved via the intermediate focal region 12b as a main region to obtain an image (S910 and S912). In the above-described process, when the main region is a region with the shortest required focusing time, an image is obtained in the main region and recorded (S910 and S912), and the process then may end without performing image obtainment in other regions.

Note in the ninth embodiment that the "focusing information" means imaging time information indicating a time from a picture-taking instruction to image obtainment, focusing information indicating a focusing degree of the obtained image, and imaging region information indicating the region of the taking lens 12 from which the image has been obtained. The same goes for seventh and eighth embodiments.

As such, in the ninth embodiment, images in all of the focal regions are obtained with the lens position being kept at the initial position according to a picture-taking instruction, next an image in a region with the shortest required focusing time is obtained and, furthermore, when the main region is not a region with the shortest required focusing time, an image is also obtained in the main region. With this, an image with high image quality accurately focused with the focused image at high speed can be obtained. Also, by imaging by focusing via any of the focal regions of the taking lens 12 as a multifocal lens, an image focused to the maximum performance of the lens can be obtained.

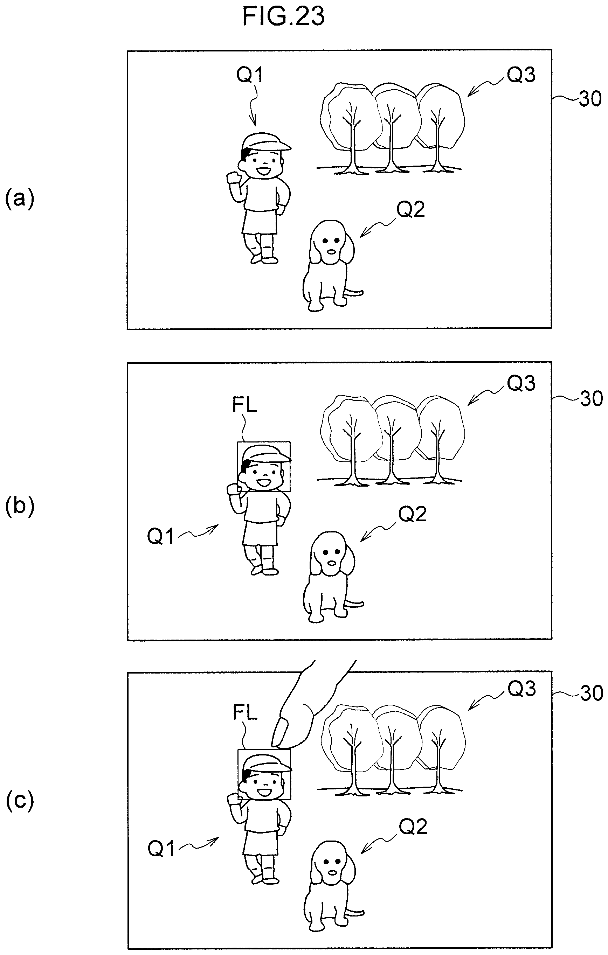

Note in the ninth embodiment that in specifying a main subject, when a human face is detected, that human may be recognized as a main subject, or a subject having the largest area may be recognized as a main subject. Also, a subject corresponding to a place touched by the user on the liquid-crystal monitor 30 having a touch panel function may be recognized as a main subject. This main-subject specifying process is depicted in (a) to (c) of Figure 23 (imaging method and imaging program). As depicted in (a) of Figure 23, an example is depicted in which the dog Q2 is present at front (near distance), the child Q1 is present at an intermediate distance, and the woods Q3 are present at a far distance. An example when the imaging device 10 recognizes the child Q1 as a main subject by face recognition is depicted in (b) of Figure 23, and the frame FL indicating a main subject is displayed so as to surround the face of the child Q1. On the other hand, an example when the user recognizes the child Q1 as a main subject by touching a face portion of the child Q1 on the liquid-crystal monitor 30 is depicted in (c) of Figure 23, and the frame FL is displayed with a point touched by the user being taken as a center. Note that the size of this frame FL may be changed and the position of the frame FL may be moved by a user's operation via the liquid-crystal monitor 30.

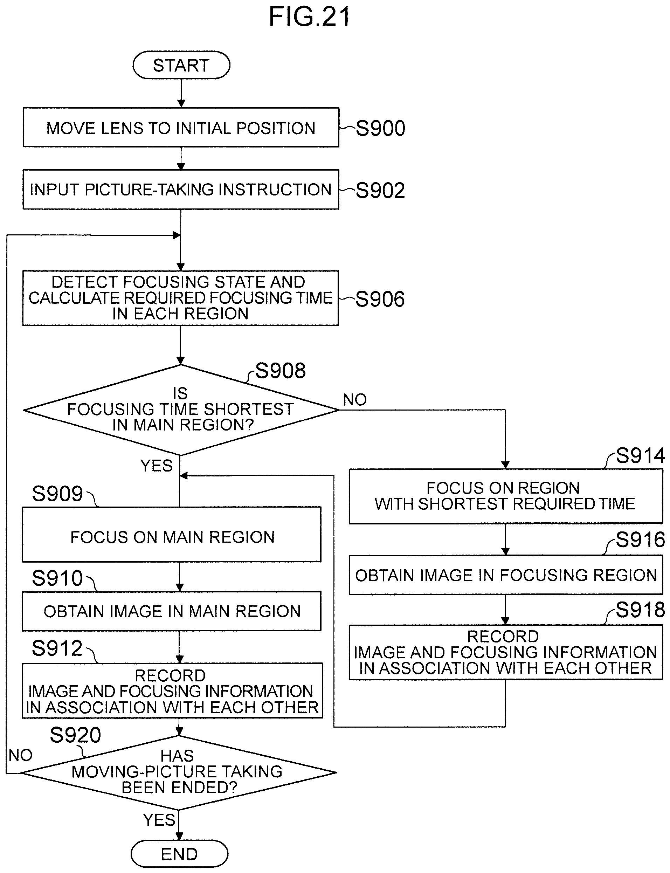

Next, the case in which moving-picture taking is performed in the ninth embodiment is described. Figure 21 (imaging method and imaging program) is a flowchart of a moving-picture taking process according to the ninth embodiment. Steps where processes similar to those of the flowchart of Figure 20 are provided with the same reference numeral, and detailed description is omitted herein.

In the flowchart of Figure 21, after image obtainment and recording in the main region (S910 and S912), the processes S906 to S912 are continuously performed until the end of moving-picture taking (NO at S920). That is, when an image is obtained in the region with the shortest required focusing time and the main region is not the region with the shortest required focusing time, an image is obtained also in the main region, and this is repeated until the endo of moving-picture taking. In the example depicted in (a) to (f) of Figure 22, after the main subject Q is focused in the main region in (d) of Figure 22 to obtain and record an image (S910 and S912), when the main subject Q moves frontward (a direction near the imaging device 10) and the required focusing time in the near focal region 12a is the shortest (NO at S908), the CPU 40 controls the taking lens 12 so that the main subject is focused in the near focal region 12a as depicted in (e) of Figure 22 (S914) to obtain and record an image (S916 and S918). Furthermore, as depicted in (f) of Figure 22, the taking lens 12 is controlled so that focusing is achieved in the intermediate focal region 12b as the main region (S909) to obtain an record an image (S910 and S912).

In the flowchart of Figure 21, with the processes described above, an image is obtained in the region with the shortest required focusing time according to a picture-taking instruction in the case of moving-picture taking. Furthermore, when the main region is not a region with the shortest required focusing time, an image is obtained also in the main region. With this, an image with high image quality accurately focused with the focused image at high speed can be obtained. Also, by imaging by focusing via any of the focal regions of the taking lens 12 as a multifocal lens, an image focused to the maximum performance of the lens can be obtained. Note in the flowchart of Figure 21 that while picture-taking in all regions after the picture-taking instruction (S904) is omitted, this picture-taking may be performed as required.

In the seventh to ninth embodiments described above, the case is described in which the AF processing unit 42 performs a phase-difference AF process. However, the AF processing unit 42 may perform a contrast AF process. When performing the contras AF process, the AF processing unit 42 integrates high-frequency components of image data in a predetermined focus region to calculate an AF evaluation value indicating a focusing state, and controls the focusing state of the taking lens 12 so that this AF evaluation value is maximum.

### [Image Processing in the Present Invention]

Next, image processing in the present invention is described. In the present invention, as described in the seventh to ninth embodiments of the imaging process described above, the obtained image and the focusing information are recorded in association with each other. Therefore, with reference to this focusing information, a desired image can be selected and extracted. Execution of a specific process is controlled by the CPU 40 based on the program (image processing program) stored in the EEPROM 46.

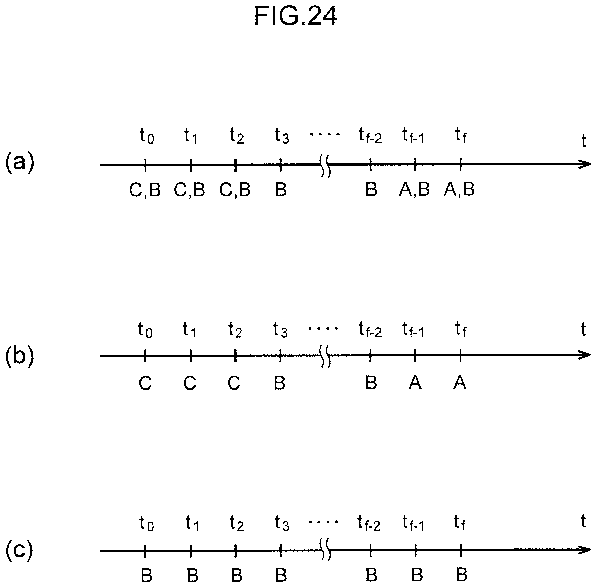

Conceptual diagrams of an image extracting process in the present invention are depicted in (a) to (c) of Figure 24 (image processing method and image processing program). Here, the case is described in which moving-picture taking is performed at times to to t_{f}. When moving-picture taking is performed with the imaging method according to the present invention, the focal region where an image is obtained depends on which of the seventh to ninth embodiments of the imaging process described above and how the main subject moves. Here, it is assumed that the ninth embodiment of the imaging process is used to obtain an image with a pattern depicted in (a) of Figure 24. In (a) of Figure 24, A, B, C provided under the respective times t0 to tf represent images focused and obtained in the near focal region 12a, the intermediate focal region 12b and the far focal region 12c, respectively. Note in the third embodiment of the imaging process that when an image is obtained in the region with the shortest required focusing time and furthermore the main region is not the region with the shortest required focusing time, an image is obtained also in the main region, and therefore two images may be obtained at a time interval equal to an interval Δt of each frame of moving-picture taking or less. In the following description, such two images are collectively described as "images A and B taken at time tᵢ".

In (a) of Figure 24, it is assumed that images depicted under a lower side are obtained at the times t₀, t₁, t₂, ... t_{f-1}, and t_{f}. For example, the situation is depicted as follows. At the time t₀, the region with the shortest required focusing time is the far focal region 12c, and therefore the image C is obtained. Also, since the main region (the intermediate focal region 12b) is not the region with the shortest required focusing time, the image B is obtained in the main region.

In the ninth embodiment of the above-described imaging process, as described at S912 and S918 of Figure 21, the image and the focusing image (imaging time information, focusing degree information, and imaging region information) are recorded in association with each other. Therefore, with reference to the focusing information recorded for each image, a desired image can be selected and extracted.

For example, with reference to the imaging time information indicating the time from a picture-taking instruction to image obtainment, an image focused and imaged can be extracted at high speed with a short time lag. An example of extracting an image with the shortest imaging time from an image group depicted in (a) of Figure 24 is depicted in (b) of Figure 24. For example, at the time to, the image C is first obtained, and then the image B is obtained. Therefore, the image C is extracted. Similarly, as depicted in an example of (c) of Figure 24, the image B imaged in the main region can also be extracted with reference to the imaging region information. Also, with reference to the imaging degree information, an image with a focusing degree equal to a threshold or more may be extracted. In this case, if a plurality of image with a focusing degree equal to the threshold or more are present, an image with the highest focusing degree may be extracted.

Note that when an image is extracted with reference to the focusing information described above, the information to be referred to may be changed at each time, and a reference value of extraction may be changed at each time. For example, when an image is extracted with reference to the focusing degree, instead of extracting an image with a focusing degree equal to the threshold or more at all times, an image with a low focusing degree may be extracted at first, and an image with a high focusing degree may be gradually extracted as time elapses. When the images extracted in this manner are replayed as moving pictures, the subject initially blurred gradually becomes clear, and natural moving images can be obtained when abrupt focusing may provide uncomfortable feelings. Conversely, images may be selected and extracted so that the focused subject may be gradually blurred.

This image selection and extraction may be performed by displaying an image before the process and an image after the process on the liquid-crystal monitor 30.

While the present invention has been described in the foregoing by using the embodiments, the technical scope of the present invention is not restricted to the scope described in the embodiments described above. It is evident for a person skilled in the art that various changes or improvements can be added to the above-described embodiments. It is evident from the description of the claims that the such changed and improved embodiments can be included in the technical scope of the present invention.

It should be noted that the execution order of the process such as the operations, procedures, steps, stages, and the like in the device, system, program, and method described in the claims, the specification, and the drawings can be achieved as any order unless specifically and explicitly instructed as "before", "prior to", and the like and an output in a previous process is used in a subsequent process. Also, regarding the operation flows in the claims, the specification, and the drawings, even if "first", "next", and the like are used for description for convenience, this does not mean that implementation according to this order is imperative.

### Reference Signs List

10 ... imaging device , 12 ... taking lens, 12a ... near focal region, 12b ... intermediate focal region, 12c ... far focal region, 16 ... solid image pickup element (CCD), 16a ... near-image light-receiving cell, 16b ... intermediate-image light-receiving cell, 16c ... far-image light-receiving cell, 18a, 18b, and 18c ... light-shielding film, 30 ... liquid-crystal monitor, 38 ... operating unit, 40 ... CPU, 46 ... EEPROM, 48 ... memory, 54 ... memory card, Ca, Cb, and Cc ... focusing degree curve, DOF ... depth of field, SD ... width of distance distribution of a subject

## Claims

1. An imaging method using a multifocal lens (12) having a plurality of regions (12a, 12b, 12c), the plurality of regions having different focal lengths, the method comprising:
a focusing state control step (S709, S714, S909, S914) of controlling a focusing state of the multifocal lens (12); and
an imaging step (S710, S716, S910, S916) of obtaining an image of a subject (Q, Q1, Q2, Q3) in the controlled focusing state, wherein
in the focusing state control step (S709, S714, S909, S914), the focusing state is controlled so that a main subject (Q, Q1) is focused via a region with a shortest required focusing time among the plurality of regions (12a, 12b, 12c) in response to a picture taking instruction (S702, S902).

2. The imaging method according to claim 1, wherein
in the focusing state control step (S709, S714, S909, S914), control is performed so that the main subject (Q, Q1) is focused via a main region (12b) having a largest area among the plurality of regions (12a, 12b, 12c).

3. The imaging method according to claim 1 or 2, wherein
after the picture-taking instruction (S702, S902) and before the focusing state control step (S709, S714, S909, S914) is performed, an image is obtained (S704, S904) in all of the plurality of regions (12a, 12b, 12c) with the focusing state being kept at the picture-taking instruction.

4. The imaging method according to any of claims 1 to 3, further comprising
a step (S712, S718, S912, S918) of recording the obtained image and imaging time information indicating a time from the picture-taking instruction (S702, S902) to image obtainment in association with each other.

5. The imaging method according to any of claims 1 to 4, further comprising
a step (S712, S718, S912, S918) of recording the obtained image and focusing degree information indicating a focusing degree of the obtained image in association with each other.

6. The imaging method according to any of claims 1 to 5, further comprising
a step (S712, S718, S912, S918) of recording the obtained image and imaging region information indicating from which area the obtained image is obtained in association with each other.

7. The imaging method according to any of claims 1 to 6, wherein
in response to the picture-taking instruction (S702, S902), at least one of the following is continuously performed to obtain a moving image of the subject (Q, Q1, Q2, Q3):
performing (S709, S714, S909, S914) control so that a main subject (Q, Q1) is focused via a region with a shortest required focusing time among the plurality of regions (12a, 12b, 12c) in the focusing state control step and obtaining an image of the subject in the imaging step; and
performing (S709, S909) control so that the main subject (Q, Q1) is focused via a main region (12b) having a largest area among the plurality of regions (12a, 12b, 12c) in the focusing state control step and obtaining the image of the subject in the imaging step (S710, S910).

8. The imaging method according to claim 4, wherein
in the focusing state control step (S712, S718, S810, S912, S918), the focusing state is controlled so that the main subject (Q, Q1) is focused via any of the plurality of regions (12a, 12b, 12c) in response to a picture-taking instruction (S702, S802, S902).

## Patentansprüche

1. Bildgebungsverfahren unter Verwendung einer Multifokallinse (12), die mehrere Zonen (12a, 12b, 12c) enthält, welche unterschiedliche Brennweiten besitzen, umfassend:
einen Fokussierzustand-Steuerschritt (S709, S714, S909, S914) des Steuerns eines Fokussierzustands der Multifokallinse (12); und
einen Bildgebungsschritt (S710, S716, S910, S916) des Gewinnens eines Bilds eines Objekts (Q, Q1, Q2, Q3) in dem gesteuerten Fokussierzustand, wobei
in dem Fokussierzustand-Steuerschritt (S709, S714, S909, S914) der Fokussierzustand derart gesteuert wird, dass ein Hauptobjekt (Q, Q1) über eine Zone mit einer kürzesten erforderlichen Fokussierzeit unter den mehreren Zonen (12a, 12b, 12c) ansprechend auf einen Bildaufnahmebefehl (S702, S902) fokussiert wird.

2. Bildgebungsverfahren nach Anspruch 1, bei dem
in dem Fokussierzustand-Steuerschritt (S709, S714, S909, S914) die Steuerung so durchgeführt wird, dass das Hauptobjekt (Q, Q1) über eine Hauptzone (12b) mit der größten Fläche unter den mehreren Zonen (12a, 12b, 12c) fokussiert wird.

3. Bildgebungsverfahren nach Anspruch 1 oder 2, bei dem
nach dem Bildaufnahmebefehl (S702, S902) und vor dem Fokussierzustand-Steuerschritt (S709, S714, S909, S914) ein Bild in sämtlichen Zonen (12a, 12b, 12c) erhalten wird (S704, S904), wobei der Fokussierzustand beim Bildaufnahmebefehl festgehalten wird.

4. Bildgebungsverfahren nach einem der Ansprüche 1 bis 3, weiterhin umfassend einen Schritt (S712, S718, S912, S918) des Aufzeichnens des erhaltenen Bilds und der Bildaufnahmezeitinformation, die eine Zeit von dem Bildaufnahmebefehl (S702, S902) bis zu der Bildgewinnung in Verbindung miteinander angibt.

5. Bildgebungsverfahren nach einem der Ansprüche 1 bis 4, weiterhin umfassend einen Schritt (S712, S718, S912, S918) des Aufzeichnens des erhaltenen Bilds und der Fokussiermaßinformation, die ein Fokussiermaß des erhaltenen Bilds in Verbindung miteinander angibt.

6. Bildgebungsverfahren nach einem der Ansprüche 1 bis 5, weiterhin umfassend einen Schritt (S712, S718, S912, S918) des Aufzeichnens des erhaltenen Bilds und der Bildaufnahmezoneninformation, die angibt, aus welchem Bereich das erhaltene Bild erhalten wird, in Verbindung miteinander.

7. Bildgebungsverfahren nach einem der Ansprüche 1 bis 6, bei dem ansprechend auf den Bildaufnahmebefehl (S702, S902) mindestens einer der folgenden Schritte kontinuierlich durchgeführt wird, um ein Bewegungsbild des Objekts (Q, Q1, Q2, Q3) zu erhalten:
Ausführen (S709, S714, S909, S914) der Steuerung derart, dass das Hauptobjekt (Q, Q1) über eine Zone mit einer kürzesten erforderlichen Fokussierzeit unter den mehreren Zonen (12a, 12b, 12c) in dem Fokussierzustand-Steuerschritt fokussiert wird, und ein Bild des Objekts in dem Bildaufnahmeschritt gewonnen wird; und
Ausführen (S709, S909) der Steuerung derart, dass das Hauptobjekt (Q, Q1) über eine Hauptzone (12b) mit der größten Fläche unter den mehreren Zonen (12a, 12b, 12c) in dem Fokussierzustand-Steuerschritt fokussiert wird und das Bild des Objekts in dem Bildaufnahmeschritt (S710, S910) erhalten wird.

8. Bildgebungsverfahren nach Anspruch 4, bei dem
in dem Fokussierzustand-Steuerschritt (S712, S718, S810, S912, S918) der Fokussierzustand derart gesteuert wird, dass das Hauptobjekt (Q, Q1) über irgendeine der mehreren Zonen (12a, 12b, 12c) ansprechend auf einen Bildaufnahmebefehl (S702, S802, S902) scharf gestellt wird.

## Revendications

1. Procédé d'imagerie utilisant une lentille multifocale (12) présentant une pluralité de régions (12a, 12b, 12c), la pluralité de régions présentant des longueurs focales différentes, le procédé comprenant :
une étape de commande d'état de focalisation (S709, S714, S909, S914) pour commander un état de focalisation de la lentille multifocale (12), et
une étape d'imagerie (S710, S716, S910, S916) pour obtenir une image d'un sujet (Q, Q1, Q2, Q3) dans l'état de focalisation commandé, dans lequel
lors de l'étape de commande d'état de focalisation (S709, S714, S909, S914), l'état de focalisation est commandé de telle sorte qu'un sujet principal (Q, Q1) subisse une mise au point via une région avec un temps de focalisation requis le plus court parmi la pluralité de régions (12a, 12b, 12c) en réaction à une instruction de prise d'image (S702, S902).

2. Procédé d'imagerie selon la revendication 1, dans lequel
lors de l'étape de commande d'état de focalisation (S709, S714, S909, S914), la commande est réalisée de telle sorte que le sujet principal (Q, Q1) subit une mise au point via une région principale (12b) présentant une zone la plus grande parmi la pluralité de régions (12a, 12b, 12c).

3. Procédé d'imagerie selon la revendication 1 ou 2, dans lequel
Après que l'instruction de prise d'image (S702, S92) et avant que l'étape de commande d'état de focalisation (S709, S714, S909, S914) aient été réalisées, une image est obtenue (S704, S904) dans l'ensemble de la pluralité de régions (12a, 12b, 12c), l'état de focalisation étant maintenu au niveau de l'instruction de prise d'image.

4. Procédé d'imagerie selon l'une quelconque des revendications 1 à 3, comprenant en outre
une étape (S712, S718, S912, S918) pour enregistrer l'image obtenue et des informations temporelles d'imagerie indiquant un temps allant de l'instruction de prise d'image (S702, S902) à l'obtention d'image associées entre elles.

5. Procédé d'imagerie selon l'une quelconque des revendications 1 à 4, comprenant en outre
une étape (S712, S718, S912, S918) pour enregistrer l'image obtenue et des informations de degré de focalisation indiquant un degré de focalisation de l'image obtenue associées entre elles.

6. Procédé d'imagerie selon l'une quelconque des revendications 1 à 5, comprenant en outre
une étape (S712, S718, S912, S918) pour enregistrer l'image obtenue et des informations de région d'imagerie indiquant à partir de quelle zone est obtenue l'image obtenue associées entre elles.

7. Procédé d'imagerie selon l'une quelconque des revendications 1 à 6, dans lequel
en réaction à l'instruction de prise d'image (S702, S902), au moins une des actions suivantes est réalisée en continu pour obtenir une image animée du sujet (Q, Q1, Q2, Q3) :
la réalisation (S709, S714, S909, S914) d'une commande de telle sorte qu'un sujet principal (Q, Q1) subisse une mise au point via une région avec un temps de focalisation requis le plus court parmi la pluralité de régions (12a, 12b, 12c) lors de l'étape de commande d'état de focalisation, et l'obtention d'une image du sujet lors de l'étape d'imagerie, et
la réalisation (S709, S909) d'une commande de telle sorte qu'un sujet principal (Q, Q1) subisse une mise au point via une région principale (12b) présentant une zone la plus grande parmi la pluralité de régions (12a, 12b, 12c) lors de l'étape de commande d'état de focalisation, et l'obtention de l'image du sujet lors de l'étape d'imagerie (S710, S910).

8. Procédé d'imagerie selon la revendication 4, dans lequel
lors de l'étape de commande d'état de focalisation (S712, S718, S810, S912, S918), l'état de focalisation est commandé de telle sorte que le sujet principal (Q, Q1) subit une mise au point via l'une quelconque de la pluralité de régions (12a, 12b, 12c) en réaction à une instruction de prise d'image (S702, S802, S902).
